(19) Europäisches Patentamt
European Patent Office
Office européen des brevets

(11) **EP 4 741 314 A1**

(12) **EUROPEAN PATENT APPLICATION**
published in accordance with Art. 153(4) EPC

(43) Date of publication:
**13.05.2026 Bulletin 2026/20**

(21) Application number: **24836317.8**

(22) Date of filing: **03.07.2024**

(51) International Patent Classification (IPC):
**B65F 1/14** (2006.01)   **B07C 5/342** (2006.01)
**G06N 20/00** (2019.01)

(52) Cooperative Patent Classification (CPC):
**B07C 5/342; B65F 1/14; G06N 20/00**

(86) International application number:
**PCT/KR2024/009354**

(87) International publication number:
**WO 2025/009869 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.07.2023 KR 20230085892**
**02.07.2024 KR 20240086646**

(71) Applicant: **LG CHEM, LTD.**
**Seoul 07336 (KR)**

(72) Inventors:
• **LEE, Sangho**
**Daejeon 34122 (KR)**
• **KIM, Dodam**
**Daejeon 34122 (KR)**
• **KIM, Jae Young**
**Daejeon 34122 (KR)**
• **OH, Hyun Taek**
**Daejeon 34122 (KR)**
• **HAN, Jungjin**
**Daejeon 34122 (KR)**

(74) Representative: **Hoffmann Eitle**
**Patent- und Rechtsanwälte PartmbB**
**Arabellastraße 30**
**81925 München (DE)**

(54) **APPARATUS AND METHOD FOR RECOVERING WASTE SILICON CARTRIDGE**

(57)   The present invention is to provide a waste silicone cartridge recovery method and a waste silicone cartridge recovery device. The waste silicone cartridge recovery device and the waste silicone cartridge recovery method according to the exemplary embodiments of the present invention can increase a recovery rate of a waste silicone cartridge.

[Figure 1]

EP 4 741 314 A1

## Description

[Technical Field]

This application claims priority to and the benefit of Korean Patent Application No. 10-2023-0085892 filed in the Korean Intellectual Property Office on July 3, 2023 and Korean Patent Application No. 10-2024-0086646 filed in the Korean Intellectual Property Office on July 2, 2024, the entire contents of which are incorporated herein by reference.

The present invention relates to a waste silicone cartridge recovery device and a waste silicone cartridge recovery method.

[Background Art]

Waste silicone cartridges are generated at construction sites. The waste silicone cartridge includes a high-density polyethylene (HDPE) and a silicone sealant, and the high-density polyethylene (HDPE) is a highly valuable material that can be used for various applications.

However, there is a problem in recycling high-density polyethylene (HDPE) due to the silicone sealant with adhesiveness in the waste silicone cartridge. As a result, the waste silicone cartridges have been landfilled or incinerated rather than recycled.

Therefore, after separately recovering the waste silicone cartridge, a process of removing the silicone sealant is required.

That is, in recycling waste silicone cartridges, it is crucial to recover the waste silicone cartridges, and it is necessary to research methods for recovery.

[Citation List] Korean Utility Model Application Publication No. 20-1995-022896

[Detailed Description of the Invention]

[Technical Problem]

The present invention is to provide a waste silicone cartridge recovery device and a waste silicone cartridge recovery method for increasing a recovery rate of a waste silicone cartridge.

[Technical Solution]

An exemplary embodiment of the present invention provides a waste silicone cartridge recovery device including: an input unit for inputting a waste item A; a first evaluation unit configured to determine whether the waste item A is a waste silicone cartridge; and a second evaluation unit configured to determine, based on a weight of the waste item A determined to correspond to a waste silicone cartridge, whether the waste item A is a target for recovery, wherein the waste silicone cartridge includes a high-density polyethylene (HDPE) and a silicon sealant, and wherein the second evaluation unit includes a second machine learning unit configured to increase accuracy of weight measurement of the waste item A through machine learning.

In addition, an exemplary embodiment of the present invention provides a waste silicone cartridge recovery method including: inputting a waste item A into a waste silicone cartridge recovery device; performing a first evaluation of determining whether the waste item A corresponds to a waste silicone cartridge, in the waste silicone cartridge recovery device; performing a second evaluation of measuring a weight of the waste item A determined to correspond to a waste silicone cartridge and determining whether the waste item A is a target for recovery; and evaluating a quality of the waste item A based on the measured weight of the waste item A, wherein the waste silicone cartridge includes a high-density polyethylene (HDPE) and a silicon sealant, and wherein the performing a second evaluation includes performing second machine learning of increasing accuracy of weight measurement of the waste item A through machine learning.

[Advantageous Effects]

The waste silicone cartridge recovery device and the waste silicone cartridge recovery method according to the exemplary embodiments of the present invention can increase a recovery rate of a waste silicone cartridge. In particular, the waste silicone cartridge recovery device and the waste silicone cartridge recovery method according to the exemplary embodiments of the present invention can reduce the post-processing burden in the simplest and most economical manner by evaluating the weight of the waste silicone cartridge mixed with sealant.

The waste silicone cartridge recovery device and the waste silicone cartridge recovery method according to the exemplary embodiments of the present invention can increase the degree of recycling of high-density polyethylene (HDPE).

[Brief Description of Drawings]

FIG. 1 shows a sequence of a waste silicone cartridge recovery method according to an exemplary embodiment of the present invention.
FIG. 2 illustratively shows a cutting unit according to an exemplary embodiment of the present invention.

[Explanation of Reference Numerals and Symbols]

10:      cutting tool

20:     insertion unit
30:     waste item receiving unit
100:    cutter

[Best Mode]

Hereinafter, exemplary embodiments of the present invention will be described in detail such that one skilled in the art to which the present invention belongs can readily implement the same. However, the present invention may be embodied in various different forms and is not limited to the configurations described herein.

When one part "includes", "comprises" or "has" one constituent element in the present specification, unless otherwise specifically described, this does not mean that another constitutional element is excluded but means that another constitutional element may be further included.

In the present specification, "p to q" means a range of p or more and q or less.

In the present specification, 'waste item A' refers to a waste item expected to be a waste silicone cartridge including a high-density polyethylene (HDPE) and a silicone sealant. The waste item A is determined to be a waste silicone cartridge or a waste silicone cartridge corresponding to a target for recovery by the waste silicone cartridge recovery device and method described below.

In the present specification, "unit" refers to an interface that performs a specific function in a specific device.

In this specification, 'nth' is arbitrarily used to distinguish components with the same name unless otherwise specified and is not meant to limit the order.

In the present specification, 'waste silicone cartridge' is a material including a high-density polyethylene (HDPE) and a silicone sealant, and a material to be obtained through a method for recycling a waste silicone cartridge is the high-density polyethylene (HDPE).

**<Waste Silicone Cartridge Recovery Method>**

An exemplary embodiment of the present invention provides a waste silicone cartridge recovery method including: determining whether a waste item A corresponds to a waste silicone cartridge, and determining, based on a weight of the waste item A determined to correspond to a waste silicone cartridge, whether the waste item A is a target for recovery. That is, the waste silicone cartridge recovery method according to an exemplary embodiment of the present invention has a feature that a waste item is not determined to be a target for recovery if the waste item does not satisfy a certain weight criterion based on the measured weight, even when the waste item is determined to be a waste silicone cartridge.

In addition, the accuracy of weight measurement of the waste item A can be increased using machine learning in the determining whether the waste item A corresponds to a waste silicone cartridge and the determining, based on the weight of the waste item A determined to be a waste silicone cartridge, whether the waste item A is a target for recovery.

Specifically, even if a waste item determined to be a waste silicone cartridge has the same weight, the content of high-density polyethylene (HDPE) may vary. However, considering the general configuration of the waste silicone cartridge, if a certain weight criterion is satisfied, it may be determined that the cartridge includes a sufficient amount of high-density polyethylene (HDPE) to have recycling value.

If any one of the performing the first evaluation, the performing the second evaluation, and the second machine learning unit is omitted, there is a problem in that foreign matters in the waste silicone cartridge are not efficiently extruded. Therefore, the waste silicone cartridge recovery method of the present invention allows efficient extrusion of sealant through the interaction of the performing the first evaluation, the performing the second evaluation, and the second machine learning unit.

That is, the present invention can precisely set a weight condition of a waste silicone cartridge determined to include a sufficient amount of high-density polyethylene (HDPE) to have recycling value through machine learning, and accordingly, further increase the recycling value of the target for recovery.

The waste silicone cartridge recovery method according to an exemplary embodiment of the present invention may further include cutting the waste item A determined to be a target for recovery. This makes it possible to further facilitate recovery of the waste silicone cartridge from the waste item A, and primarily remove unnecessary contaminants from the waste item A during the cutting process.

In an exemplary embodiment of the present invention, the cutting the waste item A may be performed using a cutter described below.

In an exemplary embodiment of the present invention, the performing the first evaluation may include capturing an image of the waste item A using an optical camera, and performing first machine learning on the captured image to increase accuracy of the performing the first evaluation.

In this way, by cutting the waste A, it is possible to promote early curing of the internal sealant and reduce the transportation burden.

In an exemplary embodiment of the present invention, the performing the second evaluation may include performing machine learning on the captured image to determine whether the waste item A is a target for recovery based on the weight, increasing the accuracy.

In an exemplary embodiment of the present invention, the machine learning may use K-means, Support Vector Machine, or Convolutional Neural Network, but is not limited thereto, and various methods able to increase the accuracy of weight measurement of the waste item A can be used. The method mentioned as an example is a good way to utilize image data obtained by capturing an image of the waste item A, which is expected to be a waste silicone cartridge. With this method, it is possible to more easily determine whether the waste item is a waste silicone cartridge and ascertain the specifications of the waste silicone cartridge, thereby increasing the accuracy of the weight measurement of the waste item A.

The waste silicone cartridge recovery method according to an exemplary embodiment of the present invention may further include a first return of returning the waste item A determined not to correspond to the waste silicone cartridge in the performing the first evaluation.

The waste silicone cartridge recovery method according to an exemplary embodiment of the present invention may further include a second return of returning the waste item A determined not to correspond to the target for recovery in the performing the second evaluation.

The waste silicone cartridge recovery method according to an exemplary embodiment of the present invention may include both the performing the first return and the performing the second return step.

The returned waste item A can be collected separately and disposed of through landfill or incineration, as usual.

The waste silicone cartridge recovery method according to an embodiment of the present invention may further include performing a third evaluation of evaluating a quality of the waste item A based on the weight measured in the performing the second evaluation when the waste item A is determined to be a material corresponding to a target for recovery in the performing the second evaluation; quantifying the evaluation from the performing the third evaluation into a score; and providing a reward based on the score. One of the purposes of the present invention is to increase the recovery rate of waste silicone cartridges by providing an appropriate reward.

In this case, the step of quantifying the evaluation from the performing the third evaluation into a score may be performed based on Formula 1 below.

$$[\text{Formula 1}]$$

$$P = W_A * F_A * P_A$$

in Formula 1,

P represents a reward (amount),
$W_A$ represents a measured weight of the waste item A,
$F_A$ represents an evaluation ratio, and
$P_A$ represents a reward unit price (amount) per weight.

In an exemplary embodiment of the present invention, the evaluation ratio may be calculated in accordance with Formula 2 below.

$$[\text{Formula 2}]$$

$$F_A = 1 - C * |W_A - W_S|/W_S$$

in Formula 2,

$F_A$ represents the evaluation ratio,
C represents an allowable quality constant,
$W_A$ represents the measured weight of the waste item A,
$W_S$ represents a standard weight, and
$\|$ represents an absolute value.

In the present specification, the evaluation ratio corresponds to a ratio at which it is possible to determine that the cartridge includes a sufficient amount of high-density polyethylene (HDPE) to have recycling value if a certain weight criterion is satisfied, considering the general configuration of the waste silicone cartridge.

In the present specification, the allowable quality constant refers to a value calculated by a user according to an allowable level of foreign matters in the waste item, and specifically means a reciprocal of an allowable foreign matter ratio in the waste.

In the present specification, the standard weight refers to a weight that serves as a standard for determining a target for recovery. In the present specification, when the measured weight of the waste item A determined to be the waste silicone cartridge is equal to or greater than the standard weight, the waste item is determined to be a target for recovery. When the measured weight of the waste item A is less than the standard weight, the waste item is excluded from the target for recovery because it indicates that the proportion of high-density polyethylene (HDPE), which is the material to be obtained through the waste silicone cartridge recycling method, is low and a large amount of unnecessary materials such as silicone sealant is contained.

In an exemplary embodiment of the present invention, the standard weight may be 50 g, but is not limited thereto, and may be adjusted as needed.

In the present specification, the allowable level of foreign matters in the waste item, which affects the allowable quality constant, can be quantified as the allowable foreign matter ratio.

Specifically, in an exemplary embodiment of the present invention, the allowable foreign matter ratio may be 10% or less, preferably 5% or less, but is not limited thereto, and the allowable foreign matter ratio may vary depending on the purpose.

In an exemplary embodiment of the present invention, the allowable foreign matter ratio may be 2% or greater.

Accordingly, in an exemplary embodiment of the present invention, the allowable quality constant may be 10 or greater, preferably 20 or greater, and 50 or less.

In an exemplary embodiment of the present invention, the $|W_A - W_S|/W_S$ may be 0.02 or less.

The waste silicone cartridge recovery method according to an exemplary embodiment of the present invention may further include displaying the score. To this end, the above-described display unit may be used.

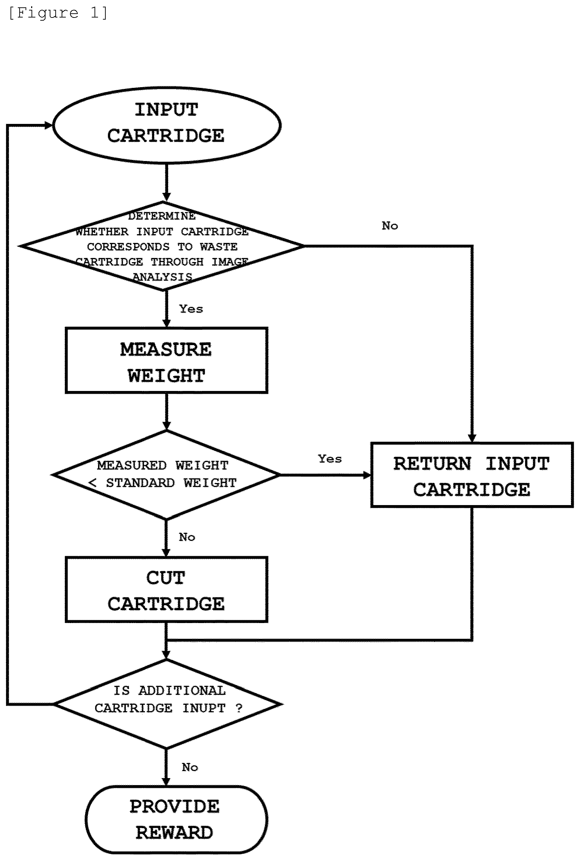

FIG. 1 shows a sequence of a waste silicone cartridge recovery method according to an exemplary embodiment of the present invention.

As shown in FIG. 1, a waste item A is first put into a waste silicone cartridge recovery device. Next, it is determined whether the input waste item A corresponds to a waste silicone cartridge (first evaluation). In this case, the waste item A is captured with an optical camera to obtain an image, and based on this, it is determined whether the waste item A corresponds to a waste silicone cartridge. If it is determined that the waste item A corresponds to a waste silicone cartridge, whether a weight of waste item A exceeds the standard weight is measured to determine whether the waste item is a target for recovery (second evaluation). If it is determined that the measured weight of the waste item A exceeds the standard weight, the waste item A is cut and processed into a form suitable for recovery, and the quality of the waste item A is evaluated using the above-mentioned method (third evaluation). Then, a reward is provided to one who has collected the waste item A according to a set criterion. When cutting the waste item A, a cutting unit described below may be used.

In this case, if it is determined in the performing the first evaluation and the performing the second evaluation that the waste item does not correspond to a waste silicone cartridge or is not a target for recovery (measured weight of waste item A < standard weight), the input waste item A is returned.

Additionally, as shown in FIG. 1, if there is an additional waste item A to be input, the waste item may be additionally input before providing a reward. The additionally input waste item A can also be rewarded or returned through the evaluations as described above.

**<Waste Silicone Cartridge Recovery Device>**

An exemplary embodiment of the present invention provides a waste silicone cartridge recovery device including an evaluation unit that determines, based on the weight of the waste item A determined to correspond to a waste silicone cartridge, whether the waste item A is a target for recovery. That is, the waste silicone cartridge recovery device according to an exemplary embodiment of the present invention has a feature that a waste item is not determined to be a target for recovery if the waste item does not satisfy a certain weight criterion based on the weight, even when the waste item is determined to be a waste silicone cartridge. That is, the waste silicone cartridge recovery device according to an exemplary embodiment of the present invention corresponds to a device that can perform the above-described waste silicone cartridge recovery method.

Therefore, it is also important for the waste silicone cartridge recovery device according to an exemplary embodiment of the present invention to determine whether the input waste item corresponds to a waste silicone cartridge and whether the waste item corresponds to a target for recovery even when the waste item corresponds to a waste silicone cartridge.

To this end, as described above, machine learning can be used to determine whether the waste item A corresponds to a waste silicone cartridge and to increase the accuracy of the weight measurement of the waste item A.

As described above, in an exemplary embodiment of the present invention, the machine learning may use K-means, Support Vector Machine, or Convolutional Neural Network, but is not limited thereto.

The waste silicone cartridge recovery device according to an exemplary embodiment of the present invention may further include a cutting unit for cutting the waste item A determined to be a target for recovery.

In an exemplary embodiment of the present invention, the cutting unit may include a waste item receiving unit in which the waste item A is received; a cutting tool for cutting the waste item A stored in the waste item receiving unit; and an insertion unit that is inserted into the waste item receiving unit and moves the waste item A toward the cutting tool.

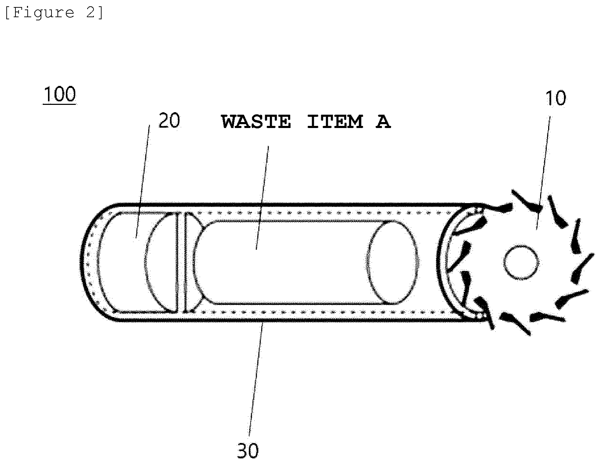

FIG. 2 illustratively shows a cutting unit according to an exemplary embodiment of the present invention. As shown in FIG. 2, a cutter 100 includes a waste item receiving unit 30 in which a waste item A, which is a waste silicone cartridge and is determined to be a target for recovery, is received, a cutting tool 10 that can cut the waste item A along one or two or more axes, and an insertion unit 20 that moves the waste item A toward the cutting tool 10.

That is, the insertion unit 20 may be provided in a form that can be inserted into the waste item receiving unit 30 so as to assist in cutting the waste item A and discharging the waste item A after cutting the waste item A.

That is, the insertion unit 20 pushes the waste item A input into the waste item receiving unit 30 toward the cutting tool 10 and allows the waste item A to be cut along one or two or more axes. When the waste item A is continuously pushed toward the cutting tool 10, the cut waste item A is discharged out of the waste item receiving portion 30. Additionally, during this process, contaminants present on the surface of waste item A can also be removed.

In an exemplary embodiment of the present invention, the cutting tool may be a band saw, a rope saw, or a circular saw, but is not limited thereto, and any tool that can cut a waste silicone cartridge may be used without limitation.

In an exemplary embodiment of the present invention, the first evaluation unit may include an optical camera that captures an image of the input waste item A, and a first machine learning unit that performs machine learning on the captured image to increase accuracy of the determination of the first evaluation unit. That is, the machine learning of the first evaluation unit is performed through images.

The waste silicone cartridge recovery device according to an exemplary embodiment of the present invention may further include a first return unit that returns the waste item A determined not to correspond to the waste silicone cartridge by the first evaluation unit. As described above, the waste item A is a waste item expected to be a waste silicone cartridge including high-density polyethylene (HDPE) and silicon sealant, and may be a waste item other than the waste silicone cartridge. In this case, recovering the waste item A is beyond the purpose of the present invention, and accordingly, the waste item A is not recovered and is returned.

The waste silicone cartridge recovery device according to an exemplary embodiment of the present invention may further include a second return unit that returns the waste item A determined not to corresponds to a target for recovery by the second evaluation unit. Even when the waste item A is determined to be a waste silicone cartridge, if a weight of the waste item does not exceed a certain weight, the recycling value is significantly low. That is, since the content of high-density polyethylene (HDPE) to be substantially recovered from the waste silicone cartridge is too small, it may be more economical not to recover the waste item.

Additionally, the waste silicone cartridge recovery device according to an exemplary embodiment of the present invention may include both the first return unit and the second return unit.

The waste silicone cartridge recovery device according to an exemplary embodiment of the present invention may further include a third evaluation unit that evaluates a quality of the waste item A based on the weight measured by the second evaluation unit when the waste item A is determined to be a material corresponding to a target for recovery by the second evaluation unit, and a display unit that quantifies and displays the evaluation by the third evaluation unit into a score.

In an exemplary embodiment of the present invention, the third evaluation unit performs evaluation by multiplying the weight of the waste item A determined to be a waste silicone cartridge by a predetermined ratio. Based on the evaluation by the third evaluation unit, an appropriate reward can be provided to one who wishes to recover the waste item A. The rewarding may be performed based on Formulas 1 and 2 described above.

That is, in an exemplary embodiment of the present invention, the first evaluation unit performs the above-described first evaluation, the second evaluation unit performs the above-described second evaluation, and the third evaluation unit performs the above-described third evaluation.

The description of the waste silicone cartridge recovery method according to the present invention can be applied to the waste silicone cartridge recovery device according to the present invention, and vice versa.

**<Waste Silicone Cartridge Recycling Method>**

An exemplary embodiment of the present invention provides a waste silicone cartridge recycling method for obtaining high-density polyethylene (HDPE) from a waste silicone cartridge recovered by a waste silicone cartridge recovery method or a waste silicone cartridge recovery device according to the present invention.

Specifically, a waste silicone cartridge recycling method is provided which removes silicone sealant from a waste silicone cartridge and obtains high-density polyethylene (HDPE).

That is, an exemplary embodiment of the present invention can use a typical waste silicone cartridge recycling method, except for using a waste silicone cartridge recovered by the waste silicone cartridge recovery method or waste silicone cartridge recovery device according to the present invention.

**Claims**

1. A waste silicone cartridge recovery device comprising:

   an input unit for inputting a waste item A;
   a first evaluation unit configured to determine whether the waste item A is a waste silicone cartridge; and
   a second evaluation unit configured to determine, based on a weight of the waste item A determined to correspond to a waste silicone cartridge, whether the waste item A is a target for recovery,
   wherein the waste silicone cartridge comprises a high-density polyethylene (HDPE) and a silicon sealant, and
   wherein the second evaluation unit comprises a second machine learning unit configured to increase accuracy of weight measurement of the waste item A through machine learning.

2. The waste silicone cartridge recovery device of claim 1, further comprising a cutting unit configured to cut the waste item A determined to be a target for recovery,
   wherein the cutting unit comprises:

a waste item receiving unit in which the waste item A is received;

a cutting tool configured to cut the waste item A received in the waste item receiving unit; and

an insertion unit inserted into the waste item receiving unit and configured to move the waste item A toward the cutting tool.

3. The waste silicone cartridge recovery device of claim 1, wherein the first evaluation unit comprises:

an optical camera configured to capture an image of the input waste item A; and

a first machine learning unit configured to perform machine learning on the captured image to increase accuracy of the determination of the first evaluation unit.

4. The waste silicone cartridge recovery device of claim 1, further comprising a first return unit configured to return the waste item A determined not to correspond to the waste silicone cartridge by the first evaluation unit.

5. The waste silicone cartridge recovery device of claim 1, further comprising a second return unit configured to return the waste item A determined not to correspond to the target for recovery by the second evaluation unit.

6. The waste silicone cartridge recovery device of claim 1, further comprising:

a third evaluation unit configured to evaluate a quality of the waste item A based on the weight measured by the second evaluation unit when it is determined by the second evaluation unit that the waste item A is a material corresponding to a target for recovery; and

a display unit configured to quantify and display the evaluation by the third evaluation unit into a score.

7. A waste silicone cartridge recovery method comprising:

inputting a waste item A into a waste silicone cartridge recovery device;

performing a first evaluation of determining whether the waste item A corresponds to a waste silicone cartridge, in the waste silicone cartridge recovery device;

performing a second evaluation of measuring a weight of the waste item A determined to correspond to a waste silicone cartridge and determining whether the waste item A is a target for recovery; and

evaluating a quality of the waste item A based on the measured weight of the waste item A,

wherein the waste silicone cartridge comprises a high-density polyethylene (HDPE) and a silicon sealant, and

wherein the performing the second evaluation comprises performing second machine learning of increasing accuracy of weight measurement of the waste item A through machine learning.

8. The waste silicone cartridge recovery method of claim 7, further comprising cutting the waste item A determined to be a target for recovery.

9. The waste silicone cartridge recovery method of claim 7, wherein the performing the first evaluation comprises:

capturing an image of the waste item A using an optical camera; and

performing first machine learning on the captured image to increase accuracy of the performing the first evaluation.

10. The waste silicone cartridge recovery method of claim 7, further comprising performing a first return of returning the waste item A determined not to correspond to the waste silicone cartridge in the performing the first evaluation.

11. The waste silicone cartridge recovery method of claim 7, further comprising performing a second return of returning the waste item A determined not to correspond to the target for recovery in the performing the second evaluation.

12. The waste silicone cartridge recovery method of claim 7, further comprising:

performing a third evaluation of evaluating a quality of the waste item A based on the weight measured in the performing the second evaluation when it is determined in the performing second evaluation that the waste item A is a material corresponding to a target for recovery;

quantifying the evaluation from the performing the third evaluation into a score; and

providing a reward according to the score.

[Figure 1]

INPUT
CARTRIDGE

DETERMINE
WHETHER INPUT CARTRIDGE
CORRESPONDS TO WASTE
CARTRIDGE THROUGH IMAGE
ANALYSIS

No

Yes

MEASURE
WEIGHT

MEASURED WEIGHT
< STANDARD WEIGHT

Yes

RETURN INPUT
CARTRIDGE

No

CUT
CARTRIDGE

IS ADDITIONAL
CARTRIDGE INUPT ?

No

PROVIDE
REWARD

[Figure 2]

## INTERNATIONAL SEARCH REPORT

| International application No. |
|---|
| **PCT/KR2024/009354** |

| A. | CLASSIFICATION OF SUBJECT MATTER |
|---|---|

**B65F 1/14**(2006.01)i; **B07C 5/342**(2006.01)i; **G06N 20/00**(2019.01)i

According to International Patent Classification (IPC) or to both national classification and IPC

| B. | FIELDS SEARCHED |
|---|---|

Minimum documentation searched (classification system followed by classification symbols)

B65F 1/14(2006.01); B09B 3/00(2006.01); B29B 17/02(2006.01); B65F 1/16(2006.01); G06Q 10/10(2012.01); G06Q 30/02(2012.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폐실리콘 카트리지(waste silicone cartridge), 회수(recovery), 고밀도 폴리에틸렌 (HDPE), 실리콘 실란트(silicone sealant), 중량(weight), 기계 학습(machine learning), 절단(cutting)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 94-06609 A1 (JOHANNBÖKE, Jörg) 31 March 1994 (1994-03-31)<br>See pages 1-2 and 6-7 and figures 1-2. | 1-12 |
| Y | KR 10-2022-0087217 A (JANG, Jun Beom et al.) 24 June 2022 (2022-06-24)<br>See paragraphs [0028]-[0069] and figures 1-5. | 1-12 |
| Y | KR 10-2021-0147808 A (KOREA UNI-PACK TECH CO., LTD.) 07 December 2021 (2021-12-07)<br>See paragraphs [0022]-[0024] and figures 3 and 5. | 2 |
| A | KR 10-2022-0167870 A (CINM CO., LTD. et al.) 22 December 2022 (2022-12-22)<br>See paragraphs [0039]-[0081] and figures 1-2. | 1-12 |
| A | KR 10-2021-0024826 A (NH NETWORKS CO., LTD. et al.) 08 March 2021 (2021-03-08)<br>See claim 1 and figure 1. | 1-12 |

☐ Further documents are listed in the continuation of Box C.　　☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **11 October 2024** | **15 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/009354**

| Patent document cited in search report | | | Publication date (day/month/year) | Patent family member(s) | | | Publication date (day/month/year) |
|---|---|---|---|---|---|---|---|
| WO | 94-06609 | A1 | 31 March 1994 | DE | 4231872 | A1 | 24 March 1994 |
| KR | 10-2022-0087217 | A | 24 June 2022 | None | | | |
| KR | 10-2021-0147808 | A | 07 December 2021 | KR | 10-2489571 | B1 | 17 January 2023 |
| KR | 10-2022-0167870 | A | 22 December 2022 | KR | 10-2537497 | B1 | 28 June 2023 |
| KR | 10-2021-0024826 | A | 08 March 2021 | KR | 10-2619616 | B1 | 29 December 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230085892
- KR 1020240086646